# EUROPÄISCHE PATENTSCHRIFT

(11) **EP 1 413 456 B1**
(45) Veröffentlichungstag und Bekanntmachung des Hinweises auf die Patenterteilung: **04.01.2006**
(21) Anmeldenummer: 04001792.3
(22) Anmeldetag: 02.11.2001
(51) Int. Cl.: B42D 15/10, B41M 5/26

(54) **Kunststoffkörper als Folie, z.B. Transferfolie oder Laminierfolie ausgebildet oder mit einer solchen Folie versehen sowie Verfahren zur Herstellung eines Mehrfarbenbildes auf oder in einem solchen Kunststoffkörper**
Plastic body, which is provided in the form of a film, for example, a transfer film or laminate film or which is provided with a film of this type, and method for producing a multicolour image on or in a plastic body of this type
Corps en matière plastique sous forme de film, par exemple film de transfert ou film laminé, ou muni d'un tel film et procédé permettant de produire une image polychrome sur ou dans un corps en matière plastique de ce type

(30) Priorität: 04.11.2000 DE 10054803; 04.11.2000 DE 10054805; 13.08.2001 DE 10139720
(43) Veröffentlichungstag der Anmeldung: 28.04.2004
(62) Teilanmeldung aus: 01992646.8
(73) Patentinhaber: Leonhard Kurz GmbH & Co. KG, 90763 Fürth (DE)
(72) Erfinder: Lutz, Norbert, 90607 Rückersdorf (DE); Zinner, Gerhard, 90602 Pyrbaum (DE)
(74) Vertreter: LOUIS, PÖHLAU, LOHRENTZ

(56) Entgegenhaltungen:
- WO-A-96/35585
- WO-A-98/19868
- US-A- 4 956 702

## Beschreibung

Die Erfindung betrifft einen Kunststoffkörper als Folie, z.B. Transferfolie, insbesondere Heißprägefolie, oder Laminierfolie ausgebildet oder mit einer solchen Folie versehen, gemäß dem Oberbegriff des Anspruchs 1 sowie ein Verfahren zur Herstellung eines Mehrfarbenbildes auf oder in einem solchen Kunststoffkörper.

Aus der WO 96/35585, die den nächstkommenden Stand der Technik bildet, sind verschiedene Ausführungen von Kunststoffkörpem und zwar massive Körper oder Beschichtungen bekannt, die jeweils ein Gemisch aus verschiedenen Pigmenten enthalten. Bei den dort beschriebenen Ausführungsbeispielen setzt sich das Pigmentgemisch aus drei Pigmentkomponenten und zwar einem Gelbpigment, einem Magentapigment und einem Cyanpigment zusammen. Durch Laserbehandlung erfolgt Farbmarkierung auf dem Kunststoffkörper. Die Farbmarkierung entsteht durch eine Bleichung der Pigmente mit der Laserbehandlung. Die Laserbedingungen werden jeweils spezifisch unter Variationen der Wellenlänge eingestellt, um bestimmte Farben zu erhalten. Die jeweils zur Anwendung kommende spezifische Wellenlänge wird zuvor durch Lichtabsorptionsmessungen an den Pigmenten ermittelt und zwar wird jeweils die Absorptionswellenlänge im Absorptionsmaximum des Pigments ermittelt. Es werden jeweils Pigmente eingesetzt, die nur ein einziges Absorptionsmaximum aufweisen. Damit soll gewährleistet werden, dass bei der Laserbehandlung eine Farbe erhalten wird, die dem Laserlicht entspricht und die Dauer der Laserbehandlung und die Intensität des Laserlichts für jede Farbe den gleichen Wert haben kann. Bei den beschriebenen Ausführungsbeispielen mit dem Pigmentgemisch aus Gelbpigment, Magentapigment und Cyanpigment wird zur Laserbehandlung violettes Laserlicht bei Wellenlänge 430 nm, blaues Laserlicht bei Wellenlänge 470 nm, gelbes Laserlicht bei Wellenlänge 575 nm und als orange bezeichnetes Laserlicht bei Wellenlänge 650 nm verwendet. Auf diese Weise sollen durch die Laserbehandlung durch entsprechende Einstellung der Laserwellenlänge bei sonst gleichen Laserbedingungen verschiedene Farbmarkierungen auf dem Kunststoffkörper zu erzeugen sein. Die Farben entstehen durch komplexe Mischung der bei der jeweiligen Laserwellenlänge gleichzeitig gebleichten Pigmente. Nachteil ist, dass keine Methodik gegeben wird, mit der sämtliche Farben erzeugbar wären.

In der WO 98/19868 ist ein entsprechend arbeitendes Verfahren zur Erzeugung von Farbmarkierungen beschrieben, bei dem jedoch spezielle Gelb-, Magenta- und Cyan -pigmente eingesetzt werden, die nämlich in einem ersten Schritt über UV-Licht aktivierbar sind und erst in einem nachfolgenden zweiten Schritt gebleicht werden.

In der nicht vorveröffentlichten DE 199 55 383 A2 ist ein Verfahren zur Erzeugung von Farbmarkierungen durch Laserbehandlung beschrieben, das unter Verwendung einer 2-Koordinaten Strahlablenkeinrichtung mit Fokussiereinrichtung arbeitet, wobei eine besondere Spiegeleinrichtung eingesetzt ist. Der zu markierende Körper weist ein Gemisch aus Cyanpigment, Magentapigment und Gelbpigment auf, wobei diese Pigmente durch rotes Laserlicht, grünes Laserlicht bzw. blaues Laserlicht selektiv gebleicht werden. Wesentlich ist, dass bei diesem Verfahren nicht vorgesehen ist, dass eine Folie, vorzugsweise Mehrschichtfolie, als Transferfolie oder als Laminierfolie oder eine auf einem Substrat aufgebrachte solche Folie eingesetzt wird.

Aus der WO 94/12352 ist ebenfalls bekannt, auf einem Kunststoffkörper, der eine Pigmentmischung enthält und als massiver Körper oder als Beschichtung ausgebildet sein kann durch Laserbehandlung mit unterschiedlicher Wellenlänge bunte Farbmarkierungen zu erzeugen. Die Farbbildung erfolgt dadurch, dass die Pigmente bei der Laserbehandlung ihre Farbe durch Farbumschlag ändern. Die Laserbedingungen werden jeweils zufällig gewählt. Ein Verfahren, um beliebige Farben gezielt zu erzeugen ist auch hier nicht gegeben. Die Anzahl der so erzeugten Farben ist sehr beschränkt.

Aus der EP 0 327 508 ist ein Verfahren bekannt, bei dem ein laserempfindlicher Farbstoff A und ein laserunempfindlicher Farbstoff B in zwei separaten übereinanderliegenden Schichten oder alternativ in einer gemeinsamen Schicht enthalten sind und durch Laserbehandlung der Farbstoff A gebleicht wird, während der Farbstoff B nicht oder nur wenig gebleicht wird. Mit der Laserbehandlung wird eine Farbmarkierung erhalten. Das Verfahren sieht keine Variation der Laserbedingungen hinsichtlich der Wellenlänge vor und es ist nur eine einfarbige Markierung, d.h. ein maximal Zwei-Farbenbild zu erhalten.

Aus der EP 0 190 997 B1 ist ein Verfahren bekannt, bei dem in einer als Überzug eines Metallblättchens ausgebildeten Kunststoffschicht oder in einer Kunststoffplatte ein Zusatz enthalten ist, der sich bei Laserbehandlung verfärben soll und zwar entweder durch Farbumschlag von einer Farbe in eine andere oder Umwandlung in schwarz. Farbmarkierungen mit unterschiedlichen Farben zu erzeugen, ist damit nicht möglich.

Aus der DE 37 38 330 A1 ist ein Laserbeschriftungsverfahren zur Anwendung bei Oberflächen mit Pigmentüberzug bekannt, wobei Pigmente des Pigmentüberzugs bei unterschiedlichen Temperaturen ihren inneren Molekularaufbau ändern und unterschiedliche Farben liefern. Mit der Lasereinstrahlung werden lokal die spezifischen Oberflächentemperaturen erzielt, wodurch farbige Lasermarkierungen erhalten werden.

Die GB 2 240 948 A beschreibt ebenfalls das Laserbeschriften von Ausweiskarten. Die Laserbeschriftung erfolgt hier durch Abtragen unterschiedlicher Farbschichten. Die dabei erhaltene Lasermarkierung erscheint als farbige Markierung.

Die DE 41 31 964 A1 beschreibt Laserbeschriftungen einer Mehrschichtenfolie mit Metallschicht und Hologrammstruktur. Das Beschriften erfolgt durch bereichsweise Zerstörung der das Hologramm tragenden Metallschicht.

Aus der EP 0 420 261 ist eine Heißprägefolie mit Hologrammstruktur bekannt, die über Laserbehandlung zwecks Fälschungssicherheit individualisiert wird. Es erfolgt mittels des Laserstrahls eine Material- oder Farbveränderung oder eine Entfernung von Teilbereichen im Schichtenaufbau der Folie. Eine Mehrfarbenmarkierung ist hierbei nicht vorgesehen.

Aus der EP 0 416 664 B1 ist bekannt, durch Lasermarkieren in Kunststoffkörpern oder Folienschichten schwarze Markierungen zu erzeugen. Die Markierung entsteht durch laserbedingte Schwärzung der in dem Kunststoff enthaltenen laserempfindlichen Komponente Molybdänsulfid.

Die DE 44 10 431 beschreibt ein Verfahren, mit dem auf einer Ausweiskarte personenbezogene Daten durch Laserbeschriftung eingebracht werden, wobei die Ausweiskarte ein im Transferverfahren aufgebrachtes Kopierschutzelement aufweist. Beim Laserbeschriften wird ein Kennzeichen in Form einer Ziffernreihe eingebracht, indem ein Teil der Ziffernreihe in dem Kopierschutzelement und ein weiterer Teil der Ziffernreihe in einem anschließenden Bereich der Ausweiskarte eingebracht wird. Die Laserbeschriftung erfolgt über lokale Demetallisierung in der Metallschicht des Kopierschutzelements bzw. durch Schwärzung des behandelten Bereichs der Ausweiskarte.

EP 0 219 011 B1 beschreibt ein spezielles Verfahren zur Laserbeschriftung von Ausweiskarten. Bei diesem Verfahren werden in verschiedenen transparenten Schichten der Karte mittels des Lasers schwarze Markierungen eingebracht. In den miteinander zusammenwirkenden transparenten Schichten werden auf diese Weise paralaxe Bilder erhalten.

Aus der DE 195 22 397 A1 ist es bekannt, durch Laserbehandlung von Pigmenten enthaltenden Kunststoffschichten helle Beschriftung zu erzeugen. Dies erfolgt durch Laserbleichen der enthaltenen Pigmente.

Ferner ist es z.B. aus EP 0537668 und DE 8130861 U1 bekannt, im Schichtenaufbau von Transferfolien Schichten durch Laserbehandlung bereichsweise abzutragen, um so Beschriftungen zu erhalten.

Außerdem ist es z.B. aus EP 0741370 B1, DE 4333546 A1 oder US 4,911,302 bekannt, durch Laserbehandlung von Schichtenkörpern Markierungen durch laserinduziertes Aufschmelzen des Materials zu erzeugen, um diese Beschriftungen sodann noch im Schmelzzustand auf einen anderen Körper zu übertragen.

Der Erfindung liegt die Aufgabe zugrunde, einen Kunststoffkörper der eingangs genannten Art zu schaffen, auf oder in dem über Laserbehandlung mehrere unterschiedliche Farbmarkierungen gezielt erzeugbar sind, vorzugsweise Markierungen in sämtlichen beliebigen Farben in Art eines Vollfarbenbildes erzeugt werden können. Außerdem liegt der Erfindung die Aufgabe zugrunde, ein Verfahren zur Erzeugung eines solchen Körpers zu schaffen.

Diese Aufgabe löst die Erfindung mit einem Kunststoffkörper gemäß Anspruch 1 bzw. mit einem Verfahren gemäß Anspruch 9.

Der Kunststoffkörper weist ein Gemisch mit mindestens drei Komponenten auf, wobei jede dieser Komponenten jeweils ein Farbmittel, z.B. ein Pigment oder ein anderes Farbmittel ist. Bei den Pigmenten handelt es sich um meist unlösliche, vorzugsweise anorganische Farbmittel. Andere Farbmittel sind z.B. organische Farbmittel. Diese sind meist löslich. Es können Gemische eingesetzt werden, die als Farbmittel ausschließlich Pigmente oder ausschließlich andere Farbmittel oder Pigmente und andere Farbmittel aufweisen. Die Farbmittel, die also die Komponenten des Gemisches bilden, werden im Folgenden kurz Komponente genannt. Wesentlich ist, daß eine oder mehrere der Komponenten mittels Laser unter jeweils für die Komponente spezifischen Laserbedingungen bleichbar ist bzw. sind. D.h. zum Bleichen der ersten Komponente ist eine erste Laserbedingung vorgesehen, bspw. eine erste spezifische Laserwellenlänge; zum Bleichen der zweiten Komponente ist eine zweite Laserbedingung, z.B. eine zweite spezifische Laserwellenlänge vorgesehen und zum Bleichen der dritten Komponente eine dritte Laserbedingung, z.B. eine dritte spezifische Laserwellenlänge. Diese zum Bleichen der verschiedenen Komponenten verwendeten spezifischen Laserbedingungen bzw. Laserwellenlängen sind jeweils untereinander verschieden. Sie sind ferner so ausgewählt, dass jeweils unter den für eine Komponente spezifischen Laserbedingungen, z.B. die spezifische Laserwellenlänge, nur diese eine Komponente oder vorzugsweise nur diese eine Komponente bleichbar ist und die übrigen Komponenten dabei nicht oder im wesentlichen nicht bleichbar sind. Damit wird es möglich, in einem Schritt jeweils spezifisch nur eine Komponente bei der Laserbehandlung zu bleichen und die übrigen unverändert zu lassen.

Wenn man ein Dreikomponentengemisch einsetzt, wird also die Farbe des Körpers vor dem ersten Schritt durch die drei Komponenten gebildet. Nach der Laserbehandlung des ersten Schrittes wird die Farbe des Körpers an der behandelten Stelle durch die beiden bei der Laserbehandlung des ersten Schrittes nicht gebleichten Komponenten gebildet und gegebenenfalls zusätzlich durch die Restfarbe der im ersten Schritt je nach Behandlung mehr oder weniger stark gebleichten Komponente. Vorzugsweise erfolgt die Farbbildung durch subtraktive Mischung der in dem Kunststoffkörper, d.h. in der Kunststoffschicht oder im gesamten massiven Kunststoffkörper gemischt vorliegenden Komponenten. Die verschiedenen Komponenten können in einer Lage gemischt dicht nebeneinander oder mehrlagig gemischt übereinander vorliegen.

Das Verfahren zur Herstellung eines Mehrfarbenbildes auf oder in einem solchen Kunststoffkörper sieht vor, dass in einem ersten Schritt durch Laserbestrahlung einer Stelle des Kunststoffkörpers bei für eine der z.B. (drei) Komponenten spezifischen Laserbedingungen nur die eine Komponente gebleicht wird und dass in einem zweiten Schritt durch Laserbestrahlung derselben Stelle des Körpers bei für eine weitere der (drei) Komponenten spezifischen Laserbedingungen nur diese weitere Komponente gebleicht wird. In dem ersten Schritt verbleiben somit neben der gebleichten ersten Komponente die (beiden) weiteren nicht gebleichten Komponenten, so dass die Farbe somit durch diese (beiden) nicht gebleichten Komponenten gebildet wird, gegebenenfalls bei nicht vollständigem Bleichungsgrad der ersten Komponente zusätzlich mit der Restfarbe der nur mehr oder weniger gebleichten ersten Komponente. Nach dem zweiten Schritt, in dem die zweite Komponente gebleicht wird, verbleibt - wenn man ein 3-Komponentengemisch ursprünglich eingesetzt hat - nur noch eine Komponente, so dass dann also die Farbe nur von dieser verbleibenden Komponente gebildet wird. Dies gilt für den Fall, dass in den vorangehenden Schritten die übrigen Komponenten vollständig gebleicht worden sind. Anderenfalls, d.h. bei nicht vollständigem Bleichungsgrad der ersten Komponente im ersten Schritt und bei nicht vollständigem Bleichungsgrad der zweiten Komponente im zweiten Schritt, wird die Farbe nach dem zweiten Schritt zusätzlich durch die Restfarbe der im ersten und zweiten Schritt nur mehr oder weniger gebleichten ersten und zweiten Komponenten gebildet.

Ferner ist als eventueller dritter Schritt die Laserbehandlung derselben Stelle des Körpers bei für die dritte Komponente, d.h. die bisher nicht gebleichte Komponente vorgesehen, wobei dieselbe Stelle des Kunststoffkörpers bei für diese dritte Komponente spezifischen Laserbedingungen, z.B. spezifischer Laserwellenlänge, nur diese dritte Komponente gebleicht wird. Nach diesem dritten Schritt sind somit an der betreffenden Stelle alle drei Komponenten gebleicht bzw. je nach Bleichungsgrad mehr oder weniger gebleicht. Diese Stelle erscheint somit abhängig von einer eventuellen farbigen Untergrundschicht oder noch eventuellen weiteren Komponenten im Kunststoffkörper bzw. in derselben Schicht des Kunststoffkörpers farblos oder getönt, im Grenzfall bei weißem Hintergrund weiß.

Ferner sind eventuelle weitere Schritte vorgesehen, in denen jeweils mit spezifischen Laserbedingungen jeweils eine oder mehrere weitere Komponenten gebleicht wird bzw. werden. Vorzugsweise ist vorgesehen, dass allgemein in einem n-ten Schritt durch Laserbestrahlung derselben Stelle des Kunststoffkörpers bei für eine andere weitere von n Komponenten nur diese n-te Komponente gebleicht wird.

Je nach Wahl der Komponenten und der spezifischen Laserbedingungen kann auch vorgesehen sein, dass bei der Laserbestrahlung wenigstens eine der Komponenten einen Farbumschlag aufweist.

Bei der Laserbehandlung in den einzelnen Schritten ist jeweils vorgesehen, dass bei der Laserbestrahlung durch Steuerung der Laserbedingungen, insbesondere der Laserwellenlänge, der Laserintensität und/oder der Bestrahlungszeit der zu erzielende Bleichungsgrad bzw. Farbumschlag eingestellt wird.

Die in den einzelnen Schritten jeweils eingesetzten Laserbedingungen werden vorzugsweise vor Durchführung des Verfahrens über Versuche mit den einzelnen Komponenten experimentell ermittelt und/ oder optimiert. Kriterium bei der Auswahl der Laserbedingungen ist vorzugsweise das zu erzielende Bleichungsergebnis. Die Auswahl der bei den einzelnen Schritten zum Einsatz kommenden Laserbedingungen kann so erfolgen, dass die Komponente bei der zum Bleichen eingesetzten Wellenlänge des Laserlichts Licht absorbiert, indem die Komponente bei dieser Wellenlänge ein Absorptionsmaximum, vorzugsweise eines von mehreren Absorptionsmaxima oder vorzugsweise ihr einziges oder ihr größtes Absorptionsmaximum aufweist. Die Auswahl kann aber auch so erfolgen, dass die Komponente bei der zum Bleichen eingesetzten Wellenlänge des Laserlichts Licht absorbiert, wobei aber die Komponente bei dieser Wellenlänge kein Absorptionsmaximum aufweist, sondern diese Wellenlänge außerhalb des Absorptionsmaximums oder außerhalb der Absorptionsmaxima der Komponente liegt.

Um mit einem Pigmentgemisch mit relativ wenig Pigmentkomponenten arbeiten zu können und dabei aber möglichst viele, vorzugsweise alle Farben erzeugen zu können, ist es von Vorteil, wenn eine Komponente ein Cyanpigment ist und/oder eine Komponente ein Magentapigment ist und/oder eine Komponente ein Gelbpigment ist. Vorzugsweise sind in dem Pigmentgemisch ein Cyanpigment, ein Magentapigment und ein Gelbpigment enthalten. Bei besonderen Ausführungsbeispielen handelt es sich bei dem Pigmentgemisch um ein Gemisch mit ausschließlich drei Pigmentkomponenten, vorzugsweise Cyanpigment, Magentapigment und Gelbpigment. Mit diesen drei Farben lassen sich durch subtraktive Mischung sämtliche Farben erzeugen. Durch das spezifische Bleichen der einzelnen Pigmentkomponenten in den einzelnen Schritten kann z.B. im ersten Schritt Blau erzeugt werden, wenn in diesem ersten Schritt nur oder vorzugsweise nur die Gelbpigmentkomponente gebleicht wird, oder es kann im ersten Schritt Grün erzeugt werden, wenn in diesem ersten Schritt nur oder vorzugsweise nur die Magentapigmentkomponente gebleicht wird, oder es kann im ersten Schritt Rot erzeugt werden, wenn in diesem ersten Schritt nur oder vorzugsweise nur die Cyanpigmentkomponente gebleicht wird. Im zweiten Schritt kann dann die Farbe Cyan, Magenta oder Gelb erzeugt werden, indem eine weitere der verbliebenen, im ersten Schritt nicht gebleichten Pigmentkomponenten gebleicht wird, d.h. wenn im ersten Schritt Blau erzeugt worden ist und also Cyan und Magenta im ersten Schritt nicht gebleicht worden sind, kann die Farbe Cyan im zweiten Schritt dadurch erzeugt werden, dass im zweiten Schritt die Magentakomponente gebleicht wird. Die Erzeugung der übrigen Farben erfolgt in entsprechender Weise, denn es gilt bei der subtraktiven Farbmischung:
a) cyan+magenta+gelb schwerz
b) cyan+magenta blau
c) cyan+magenta grün
d) gelb+magenta rot

Die Farbmischung a) liegt vor der Laserbehandlung, d.h. vor dem ersten Schritt vor. Der Kunststoffkörper erscheint schwarz oder grau. Die Farbmischung b) oder c) oder d) liegt nach dem ersten Schritt vor, d.h. der Kunststoffkörper hat an der Stelle, an der die Laserbehandlung im ersten Schritt erfolgt ist, eine blaue bzw. grüne bzw. rote Farbmarkierung. Nach dem zweiten Schritt, wenn also in dem zweiten Schritt an derselben Stelle die Laserbehandlung des zweiten Schritts durchgeführt worden ist, ist die Farbmarkierung an dieser Stelle des Kunststoffkörpers in der Farbe cyan oder gelb oder magenta, je nachdem, welche der beiden im ersten Schritt an dieser Stelle nicht gebleichten Pigmentkomponenten im zweiten Schritt nicht gebleicht worden sind. Um im 3. Schritt an dieser Stelle eine farblose oder transparente Markierung zu erhalten, ist an dieser selben Stelle sodann der 3. Schritt durchzuführen, in welchem also mit den jeweiligen pigmentspezifischen Laserbedingungen das verbliebene noch nicht gebleichte Pigment gebleicht wird.

Auf diese Weise kann an jeder Stelle durch sukzessive Laserbehandlung an dieser selben Stelle jeweils eine Farbmarkierung in einer beliebig gewünschten Farbe erzeugt werden. Es können auf diese Weise nacheinander nebeneinanderliegende Stellen des Kunststoffkörpers behandelt und so auf dem Kunststoffkörper durch nebeneinanderliegende Farbmarkierungen ein Mehrfarbenbild, vorzugsweise ein sogenanntes Vollfarbenbild erzeugt werden.

Anstelle des oben beschriebenen Pigmentgemischs mit den Pigmentkomponenten Cyanpigment, Magentapigment und Gelbpigment kann auch ein entsprechendes Farbmittelgemisch mit nicht Pigmente darstellenden Farbmitteln eingesetzt werden, d.h. ein Farbmittelgemisch aus Cyanfarbmittel, Magentafarbmittel und Gelbfarbmittel als Komponenten. Es kann hierbei in gleicher Weise gearbeitet werden, wobei in den einzelnen Schritten die für die jeweiligen Farbmittel spezifischen Laserbedingungen angewandt werden.

Zur Laserbehandlung werden bei den verschiedenen Systemen vorzugsweise gepulste frequenzvervielfachte Festkörpedaser, optische parametrische Oszillatoren (OPO's) und gepulste UV-Laser (beispielsweise Excimerlaser) eingesetzt. Bei der Laserbehandlung wird vorzugsweise die Intensität und/oder die Pulsdauer der Laserstrahlung so eingestellt, dass ein maximales Bleichergebnis bzw. eine maximale Farbveränderung ohne erkennbare Materialschädigung des Kunststoffkörpers auftritt. Das Verfahren kann an massiven Kunststoffkörpern und aber auch an Transferfolien, insbesondere Heißprägefolien, oder an Laminierfolien eingesetzt werden. Mit dem Einsatz an Transfer- oder Laminierfolien ergeben sich Vorteile dadurch, daß diese Folien auf einer Vielzahl von Materialien, z.B. Metalle, Holz usw. aufgebracht werden können, um beliebige Körper zu dekorieren. Mit den Folien ergibt sich nur geringer Farbmittel- bzw. Pigmentbedarf, da die Farbmittel bzw Pigmente dann nur in einer dünnen Schicht vorliegen müssen. Mit der Verwendung von Folien ist es auch möglich beliebige große Körper nur lokal zu beschichten, z,B. durch Druckverfahren.

Bei der Laserbehandlung werden Energiedichten vorzugsweise zwischen 0,05 und 0,5 J pro cm² bei einer Pulsdauer von 5 bis 20 ns angewandt, wobei das Bleichergebnis auch von der Pulszahl bestimmt werden kann. Die lasersensitive Schicht mit der Pigmentmischung kann auf der Transfer- bzw. Laminierfolie vollflächig, aber auch nur bereichsweise vorhanden sein.

Im nachfolgenden werden bevorzugte Ausführungsbeispiele unter Bezugnahme auf die beigefügten Figuren näher erläutert.
Es zeigen:
- Figuren 1 bis 5: Schnittdarstellungen von verschiedenen Heißprägefolien jeweils mit lasersensitiver Schicht.
- Figuren 6 bis 10: Schnittdarstellungen verschiedener Laminierfolien jeweils mit lasersensitiver Schicht.

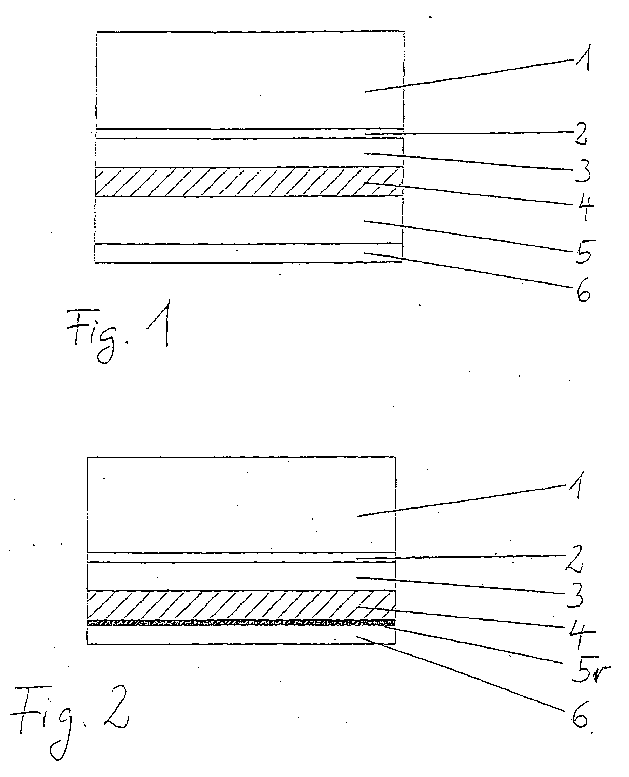

Bei den in den Figuren 1 bis 5 dargestellten Folien handelt es sich um Heißprägefolien. Die Heißprägefolie in Figur 1 umfaßt einen Trägerfilm 1, eine Ablöseschicht 2, eine Schutzschicht 3, eine lasersensitive Schicht 4, eine Hintergrundschicht 5 und eine Klebeschicht 6.

Bei dem Trägerfilm 1 handelt es sich vorzugsweise um einen Polyesterfilm einer Dicke von 6 bis 100 µm, bevorzugt einer Dicke von 19 bis 38 µm. Auf diesem Trägerfilm 1 sind übereinander die Schichten 2 bis 6 angeordnet. Sie sind bei der Herstellung der Heißprägefolie nach an sich bekannten Verfahren aufgebracht.

Die Ablöseschicht 2 ist eine Trennschicht. Sie ist vorzugsweise als eine bei Wärmeentwicklung weich werdende Schicht ausgebildet, die beim Aufbringen der Heißprägefolie auf das Substrat die Ablösung der weiteren Schichten von dem Trägerfilm 1 gestattet. Die Ablöseschicht 2 hat im allgemeinen eine Dicke von höchstens 1 µm.

Die Schutzschicht 3 ist als Schutzlackschicht ausgebildet. Es handelt sich dabei um eine transparente Lackschicht mit der Aufgabe, die freie Oberfläche des mit der Heißprägefolie dekorierten Gegenstandes gegen mechanische Beschädigungen und chemische Einwirkungen weitgehend zu schützen. Die Schichtdicke liegt vorzugsweise zwischen 1 bis 2 µm.

Die lasersensitive Schicht 4 ist als sog. erste Farblackschicht ausgebildet. Es handelt sich hierbei um eine durch Pigmente oder andere Farbmittel eingefärbte Lackschicht einer Dicke von vorzugsweise 3 bis 10 µm. Die Pigmente bzw. die anderen farbgebenden Systeme bzw. Farbmittel dieser Farblackschicht sind mit Hilfe eines Laserstrahls, dessen Wellenlänge vorzugsweise im sichtbaren Bereich liegt, selektiv bleichbar und/oder durch Farbumschlag in der Farbe veränderbar. Vorzugsweise liegt die Pigmentkonzentration dieser Lackschicht 4 zwischen 3 und 15% bezogen auf Festkörper. Das Bindemittelsystem dieser Lackschicht 4 darf durch die Einwirkung der Laser optisch nicht verändert werden, so dass an den bestrahlten Stellen lediglich eine farbige Kontrastmarkierung ohne erkennbare Schädigung der Folie entsteht. Die Folie wird weder an der Oberfläche noch im Innern erkennbar geschädigt.

Die Hintergrundschicht 5 ist als sog. zweite Farblackschicht ausgebildet. Diese Schicht ist anders gefärbt als die lasersensitive Schicht 4. Die Schicht 5 ist z.B. weiß oder elfenbeinfarbig, wenn die lasersensitive Schicht 4 schwarz oder grau ist. Die Schicht 5 dient in erster Linie als helle Backupschicht für die in der lasersensitiven Schicht 4 durch Laserstrahlung erzeugten Farben. Die Schichtdicke der Schicht 5 liegt vorzugsweise bei 5 bis 20 µm oder bei 15 bis 20 µm.

Es besteht die Möglichkeit, die Hintergrundschicht 5 - ebenso wie die lasersensitive Schicht 4 - nicht über die gesamte Fläche der Heißprägefolie und damit nicht über die gesamte zu dekorierende Oberfläche in der gleichen Farbstellung vorzusehen. Die Schichten 4 und 5 können vielmehr einzeln - und damit auch unterschiedlich - aus verschiedenfarbigen Bereichen zusammengesetzt sein.

Bei der Kleberschicht 6 handelt es sich um eine bei Transferfolien an sich übliche und bekannte Kleberschicht einer Dicke von etwa 1 bis 10 µm, wobei die Kleberschicht für eine Heißprägefolie so zusammengesetzt ist, dass sie erst bei entsprechender Wärmeeinwirkung klebrig wird.

Die Schichten 2 bis 6 können nach folgenden Rezepturen hergestellt sein:

### Ablöseschicht 2 (Trennschicht):

| | |
|---|---|
| Toluol | 99,5 Teile |
| Esterwachs (Tropfpunkt 90°C) | 0,5 Teile |

### Schutzschicht 3 (Schutzlackschicht):

| | |
|---|---|
| Methylethylketon | 61,0 Teile |
| Diaketonalkohol | 9,0 Teile |
| Methylmethacrylat (Tg = 122°C) | 18,0 Teile |
| Polyethylendispersion (23% in Xylol) (Erweichungspunkt 140°C) | 7,5 Teile |
| Hochmolekulares Dispergieradditiv (40%, Aminzahl 20) | 0,5 Teile |
| Extender (Aluminiumsilikat) | 4,0 Teile |

### Lasersensitive Schicht 4 (Erste Farblackschicht):

| | |
|---|---|
| Methylethylketon | 34,0 Teile |
| Toluol | 26,0 Teile |
| Ethylacetat | 13,0 Teile |
| Cellulosenitrat (niedrigviskos, 65% in Alkohol) | 20,0 Teile |
| Lineares Polyurethan (Fp.>200°C) | 3,5 Teile |
| Hochmolekulares Dispergieradditiv (40%, Aminzahl 20) | 2,0 Teile |
| z.B.: Pigment Blue 15:4 | 0,5 Teile |
| Pigment Red 57:1 | 0,5 Teile |
| Pigment Yellow 155 | 0,5 Teile |

### Hintergrundschicht 5 (Zweite Farblackschicht):

| | |
|---|---|
| Methylethylketon | 40.0 Teile |
| Toluol | 22,0 Teile |
| Ethylen-Vinylacetat-Terpolymer (Fp.= 60°C) | 2,5 Teile |
| Polyvinylchlorid (Tg: 89°C) | 5,5 Teile |
| Polyvinylchlorid (Tg: 40°C) | 3,0 Teile |
| Dispergieradditiv (50%, Säurezahl 51) | 1,0 Teile |
| Titandioxid (d=3,8-4,2 g/cm³) | 26,0 Teile |

### Kleberschicht 6:

| | |
|---|---|
| Methylethylketon | 55,0 Teile |
| Toluol | 12,5 Teile |
| Ethanol | 3,5 Teile |
| Polyvinylacetat (Erweichungspkt. 80°C) | 6,0 Teile |
| Butyl-/Methylmethacrylat (Tg: 80°C) | 8,0 Teile |
| Ethylmethacrylatharz (Tg: 63°C) | 3,0 Teile |
| Methacrylatcopolymer (Tg: 80°C) | 5,0 Teile |
| Ungesättigtes Polyesterharz (Erweichungspkt. 103°C) | 3,5 Teile |
| Siliciumdioxid | 3,5 Teile |

Anstelle dieser Heißprägefolie kann auch eine andere Transferfolie eingesetzt werden. Sie kann entsprechenden Aufbau wie die beschriebene Heißprägefolie aufweisen.

Transferfolien - im konkreten Fall hier Heißprägefolien - werden vorzugsweise in herkömmlicher Weise auf ein Substrat aufgebracht, und zwar derart, dass die Kleberschicht 6 der Substratoberfläche zugewandt ist. Die Kleberschicht 6 bildet beim Heißprägen sodann eine Klebeverbindung mit der Substratoberfläche. Der Trägerfilm 1 wird sodann - nach dem unter Wärmeeinwirkung beim Heißprägen Erweichen der Ablöseschicht 2 - abgezogen. Bei der derart auf der Substratoberfläche aufgebrachten Heißprägefolie bildet sodann die Schutzschicht 3 die obere vom Substrat abgewandte Oberfläche der Prägefolie.

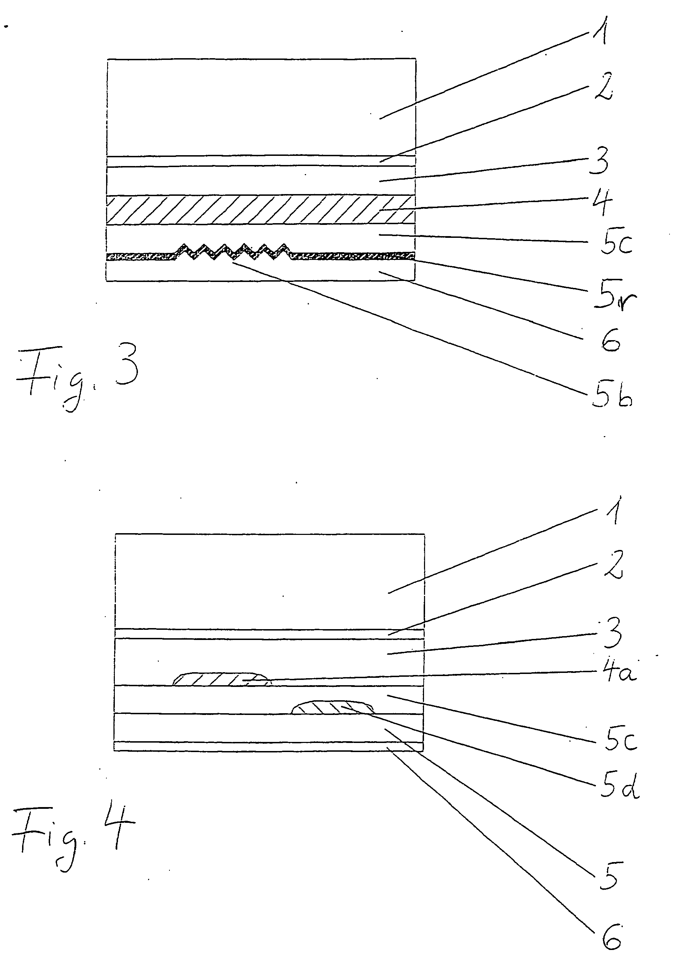

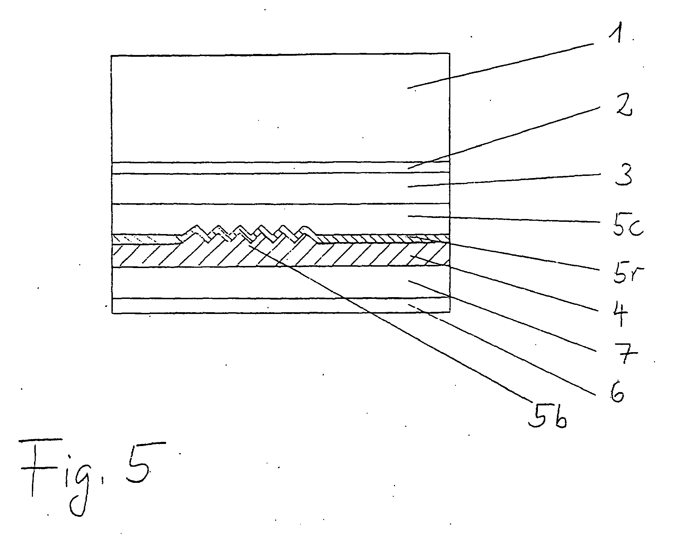

Die in den Figuren 2 bis 4 dargestellten Heißprägefolien weisen eine gegenüber der Folie in Figur 1 anders ausgebildete Hintergrundschicht auf. Bei dem Beispiel in Figur 2 ist die Hintergrundschicht als Reflexionsschicht 5r ausgebildet. In einem Sonderfall ist die Reflexionsschicht als metallische Reflexionsschicht ausgebildet. Die Reflexionsschicht kann für bestimmte Spektralbereiche transparent bzw. teiltransparent sein. Sie kann einen höheren Brechungsindex als die anderen Schichten aufweisen und weist deshalb erhöhte Lichtreflexion auf. Bei dem Beispiel in Figur 3 ist eine Schicht 5c vorgesehen als eine zusätzliche Lackschicht, die vorzugsweise transparent ist. Ferner ist eine Reflexionsschicht 5r vorgesehen, die bereichsweise eine Diffraktions- oder Hologrammstruktur 5b aufweist. Bei dem Ausführungsbeispiel in Figur 3 ist diese Struktur 5b als Bestandteil der Lackschicht 5c und der Kleberschicht 6 sowie der dazwischenliegenden Schicht ausgebildet. Alternativ oder zusätzlich kann eine Diffraktionsstruktur auch als Bestandteil der Lackschicht 5c und/oder der lasersensitiven Farblackschicht 4 und/oder der Kleberschicht 6 ausgebildet sein. Die Diffraktionsstruktur kann in diesen Fällen wie dargestellt bereichsweise, aber auch als durchgehende Schicht ausgebildet sein.

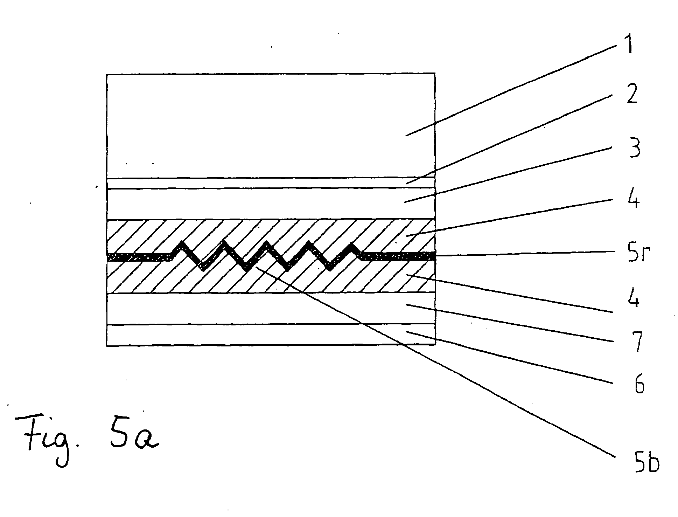

Bei dem Beispiel in Figur 4 ist in der Hintergrundschicht 5c in einem begrenzten Bereich ein Druckbild 5d und in der lasersensitiven Schicht seitlich versetzt zu diesem ein begrenzter lasersensitiver Bereich 4a angeordnet.

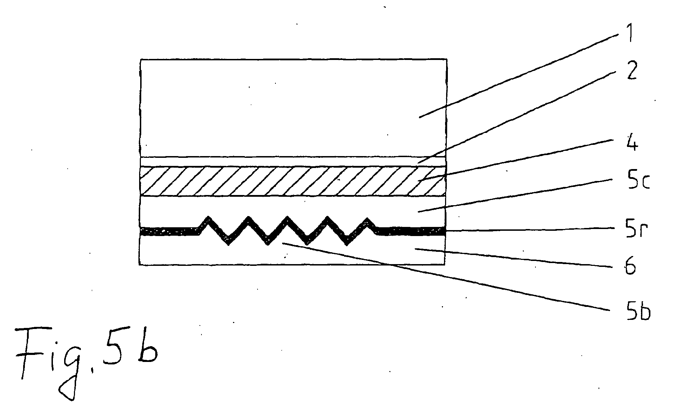

In Fig. 5 ist eine Heißprägefolie mit einem abgewandelten Schichtenaufbau gezeigt. Der Schichtenaufbau ist ähnlich dem in Fig. 3, wobei jedoch die Reihenfolge der Schichten abgewandelt ist und zwar derart, daß die lasersensitive Schicht 4 auf der zum Substrat gewandten Seite der Reflexionsschicht 5 angeordnet ist. Die Schichten liegen in folgender Reihenfolge aufeinander:

Ein Trägerfilm 1, eine Ablöseschicht 2, eine Schutzschicht 3, eine Zwischenschicht 5c, eine Reflexionsschicht 5, eine lasersensitive Schicht 4, eine Hintergrundschicht 7 und eine Kleberschicht 6. In den aneinander angrenzenden Bereichen von lasersensitiver Schicht 4, Reflexionsschicht 5 und Zwischenschicht 5c ist eine Diffraktionsstruktur 5b ausgebildet. Sie kann als Beugungsgitter ausgebildet sein. Alternativ kann die Struktur 5b auch als Hologrammstruktur ausgebildet sein. Bei dem dargestellten Ausführungsbeispiel in Fig. 5 wird die Diffraktionsstruktur 5b bei der Herstellung der Folie ausgebildet, indem die Diffraktionsstruktur zunächst in die Zwischenschicht 5c eingeprägt wird, sodann die Reflexionsschicht 5r, z. B. durch Aufdampfen aufgebracht wird. Die Reflexionsschicht 5 ist in den Abschnitten außerhalb der Diffraktionsstruktur als glatte Reflexionsschicht 5r ausgebildet. Sie hat vorzugsweise eine Schichtdicke von < 1 µm. Sie ist in bestimmten Betrachtungswinkeln zumindest für bestimmte Spektralbereiche transparent oder teiltransparent. Nach dem Aufbringen der Reflexionsschicht 5r wird die lasersensitive Schicht 4 aufgebracht. Die so hergestellte Diffraktionsstruktur 5b ist in den aneinander unmittelbar angrenzenden Bereichen der Schichten 5c und 4 ausgebildet. Bei der Betrachtung der Diffraktionsstruktur ergeben sich in Abhängigkeit vom Beleuchtungs- und Betrachtungswinkel variierende optische Effekte.

Bei der Folie in Figur 5a liegen die Schichten in folgender Reihenfolge: Trägerschicht 1, Ablöseschicht 2, Schutzschicht 3, lasersensitive Schicht 4, Reflexionsschicht 5r, lasersensitive Schicht 4, zusätzliche Lackschicht 7 und Kleberschicht 6. Die beiderseits der Reflexionsschicht 5r ausgebildeten lasersensitiven Schichten 4 können identisch ausgebildet sein, d.h. die Reflexionsschicht ist dann in dieser lasersensitiven Gesamtschicht angeordnet. Die lasersensitiven Schichten können jedoch auch unterschiedlich ausgebildet sein. In einander angrenzenden Bereichen der lasersensitiven Schichten 4 und der Reflexionsschicht 5r ist eine Diffraktionsstruktur 5b ausgebildet. Alternativ kann die Struktur 5b auch als Hologrammstruktur ausgebildet sein. Erhöhte Fälschungssicherheit ergibt sich bei diesem Ausführungsbeispiel dadurch, daß zwei lasersensitive Schichten an die Diffraktions- bzw. Hologrammstruktur angrenzen, die gleich oder verschieden ausgebildet sein können. Die Lackschicht 7, die optional ist, ist hierbei als transparente Schicht bzw. als helle Backupschicht ausgebildet. Alternativ können auch die Lackschicht 7 und die Kleberschicht 6 entfallen und die in Fig. 5a unter der Reflexionsschicht 5r dargestellte zweite lasersensitive Schicht 4 als lasersensitive Kleberschicht ausgebildet sein.

### Bei der Folie in Figur 5b liegen die Schichten in folgender Reihenfolge:

Trägerfilm 1, Ablöseschicht 2, lasersensitive Schicht 4, zusätzliche Lackschicht 5c, Reflexionsschicht 5r, Kleberschicht 6. Die Schichten 5c und 6 können aus identischem Material oder verschiedenem Material ausgebildet sein. Bei der lasersensitiven Schicht 4 handelt es sich bei diesem Ausführungsbeispiel um eine Schutzlackschicht, die lasersensitiv ausgebildet ist, indem sie die betreffenden vergleichbaren Pigmente enthält. In den aneinander angrenzenden Bereichen von zusätzlicher Lackschicht 5c, Reflexionsschicht 5r und Kleberschicht 6 ist eine Diffraktionsstruktur ausgebildet. Sie kann als Beugungsgitter ausgebildet sein. Alternativ kann die Struktur 5b auch als Hologrammstruktur ausgebildet sein.

Nachdem die Transferfolie, im vorliegenden Falle Prägefolie, auf dem Substrat aufgebracht ist, erfolgt die Laserbehandlung, um transparente und/oder farbige Markierungen in der lasersensitiven Schicht 4 zu erzeugen. Um an einer bestimmten Position in der lasersensitiven Schicht 4 eine bestimmte Markierung, vorzugsweise Farbmarkierung zu erzeugen, wird diese Stelle mit Laserstrahlung bestrahlt.

Im Falle der Laserbehandlung einer Folie mit dem Schichtenaufbau gemäß Fig. 5 erfolgt die Laserbestrahlung durch die Reflexionsschicht inklusive der diffraktiven Struktur 5b hindurch. Der Laserstrahl wird bevorzugt senkrecht auf die Folienebene von oben her gerichtet. Die Reflexionsschicht 5r ist für die Laserstrahlung durchlässig, insbesondere bei Senkrechteinstrahlung. Auch die Gitter- oder Hologrammstruktur 5b der im übrigen Bereich die Reflexionsschicht 5r bildenden Schicht ist für die Laserstrahlung durchlässig, wobei die Strahlung jedoch an der Diffraktionsstruktur mehr oder weniger auch und zum Teil reflektiert werden kann. Die unter der im übrigen Bereich die Reflexionsschicht 5r bildenden Schicht noch innerhalb der Diffraktionsstruktur 5b und darunter angeordnete lasersensitive Schicht 4 wird durch die Lasereinwirkung verändert, indem an der bestimmten Stelle eine Farbveränderung durch Bleichen erfolgt.

Im Folgenden wird der Bleichvorgang, wie er bei den dargestellten Ausführungsbeispielen in der jeweiligen lasersensitiven Schicht abläuft, beschrieben.

Beim Bleichen wird in einem ersten Schritt eine blaue oder grüne oder rote Farbmarkierung erzeugt, indem diese Stelle mit einer bestimmten Laserwellenlänge bestrahlt wird, mit der eine bestimmte Pigmentkomponente gebleicht wird.

Um die Farbe Blau zu erzeugen darf nur die Gelbpigmentkomponente gebleicht werden. Hierfür wird blaues Laserlicht eingesetzt. Für das Bleichen ist eine bestimmte Mindestintensität erforderlich. Ferner darf eine gewisse Pulsdauer nicht überschritten werden. Um im ersten Schritt eine grüne Farbmarkierung zu erhalten darf nur die Magentapigmentkomponente gebleicht werden. Hierfür wird grünes Laserlicht eingesetzt. Um im ersten Schritt eine rote Farbmarkierung zu erhalten, darf nur die Cyanpigmentkomponente gebleicht werden. Hierfür wird rotes Laserlicht eingesetzt.

Um an dieser Stelle eine Farbmarkierung in der Farbe Cyan oder Magenta oder Gelb zu erzeugen, wird diese Stelle in einem zweiten Schritt laserbehandelt, und zwar mit einer Laserwellenlänge, mit der eine der an dieser Stelle noch nicht gebleichten Pigmentkomponenten gebleicht wird. Wenn im ersten Schritt eine blaue Farbmarkierung erzeugt worden ist, sind an dieser Stelle die Cyanpigmentkomponente und die Magentapigmentkomponente ungebleicht. Um die Farbe Cyan an dieser Stelle zu erzeugen, muss die Magenta-Pigmentkomponente in diesem zweiten Schritt gebleicht werden. Dies erfolgt mit grünem Laserlicht. Es ergibt sich damit an dieser Stelle eine cyanfarbene Markierung.

Falls in dem zweiten Schritt anstelle dieser cyanfarbenen Markierung eine magentafarbene Markierung erhalten werden soll, muss die im ersten Schritt erzeugte blaue Farbmarkierung mit rotem Laserlicht behandelt werden. Dadurch wird das Cyanpigment an dieser Stelle gebleicht, so dass also das Magenta-Pigment ungebleicht an dieser Stelle verbleibt. Es ergibt sich damit die magentafarbene Markierung an dieser Stelle.

In entsprechender Weise lassen sich aus einer im ersten Schritt erzeugten grünen Farbmarkierung, die aus dort verbliebenem ungebleichten Cyanpigment und Gelbpigment gebildet wird, eine cyanfarbene Markierung oder eine gelbfarbene Markierung erzeugen, und zwar durch Behandlung mit blauem Laserlicht bzw. rotem Laserlicht.

In entsprechender Weise kann eine im ersten Schritt erzeugte rote Farbmarkierung im zweiten Schritt in eine gelbe oder magentafarbene Markierung umgewandelt werden, und zwar durch Laserbehandlung im zweiten Schritt mit grünem Laserlicht bzw. blauem Laserlicht.

Um an der im ersten und zweiten Schritt behandelten Stelle eine transparente Stelle zu erhalten, d.h. eine weiße Stelle zu erhalten, wenn die Hintergrundschicht 5 weiß ist, muss in einem 3. Schritt diese Stelle mit einem Laserstrahl behandelt werden, dessen Wellenlänge so eingestellt ist, dass die an dieser Stelle nach dem zweiten Schritt ungebleicht verbliebene Pigmentkomponente gebleicht wird, d.h. die gelbe Farbmarkierung muss mit blauem Laserlicht, die magentafarbene Markierung mit grünem Licht und die cyanfarbene Markierung mit rotem Laserlicht gebleicht werden.

In gleicher Weise werden sodann in der lasersensitiven Schicht 4 weitere benachbarte Stellen behandelt, um weitere Farbmarkierungen in der Schicht 4 der Prägefolie zu erzeugen. Auf diese Weise kann ein Vollfarbenbild hergestellt werden.

Laserbehandlung kann auch eingesetzt werden, um in dem Farbmittel bzw. den Farbmitteln in der lasersensitiven Schicht durch Farbumschlag Farbmarkierungen bzw. ein Vollfarbenbild zu erzeugen. Die Laserbehandlung kann in entsprechender Weise mit aufeinanderfolgenden Verfahrensschritten erfolgen. Als Farbmittel, d.h. farbgebende Substanzen kommen Pigmente in Frage. Diese sind meist unlöslich und es handelt sich in der Regel um anorganische Substanzen. Als Farbmittel kommen aber auch meist lösliche, organische Farbmittel in Frage. Der Farbumschlag erfolgt jeweils bei spezifischen Laserbedingungen, die bei der Laserbehandlung in den einzelnen Schritten dann angewandt werden.

Die Laserbehandlung der Transferfolie zur Erzeugung der Farbmarkierungen kann alternativ auch vor dem Aufbringen der Folie erfolgen, und zwar insbesondere dann, wenn die Schutzschicht 3 als eine für Laserstrahlung nicht oder nur teilweise transparente Schicht oder eine für Laserstrahlung im bestimmten Wellenlängenbereich nicht transparente Schicht ausgebildet ist oder eine zusätzliche UV-absorbierende Schutzschicht vorgesehen ist. Die Laserbehandlung erfolgt dann vor dem Auftragen der Folie, indem der Laserstrahl auf die Rückseite der Folie, d.h. auf die Hintergrundschicht 5 bzw. die Kleberschicht 6 gerichtet wird und somit die lasersensitive Schicht 4 also von der anderen Seite her behandelt wird, um darin die Farbmarkierungen in gleicher Weise zu erzeugen. Die Hintergrundschicht 5 und die Kleberschicht 6 sind bei diesen Anwendungen für die betreffende Laserstrahlung transparent oder zumindest teiltransparent.

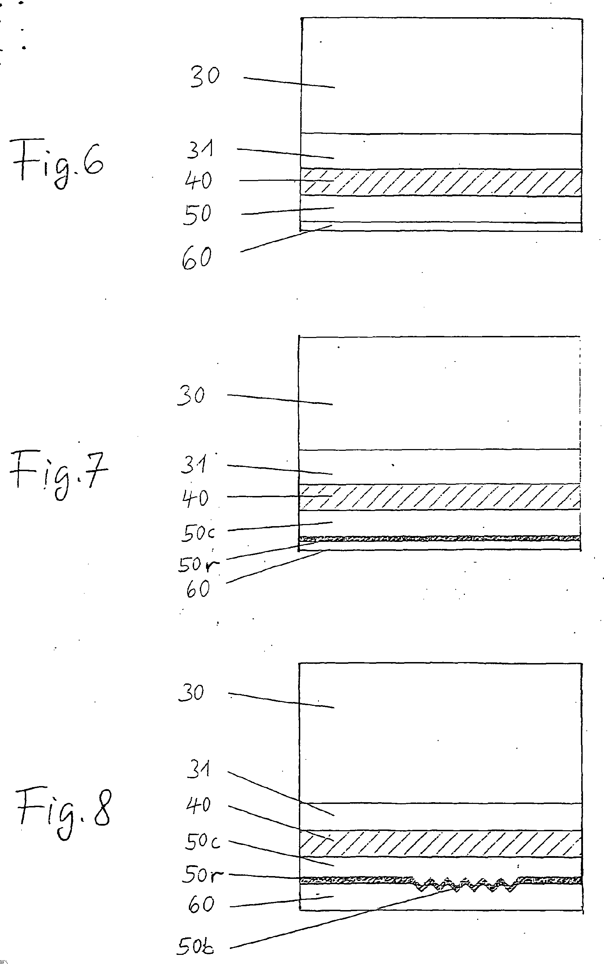

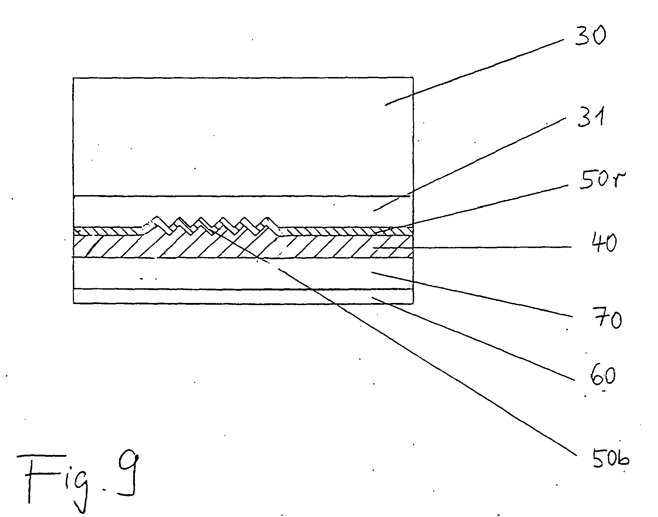

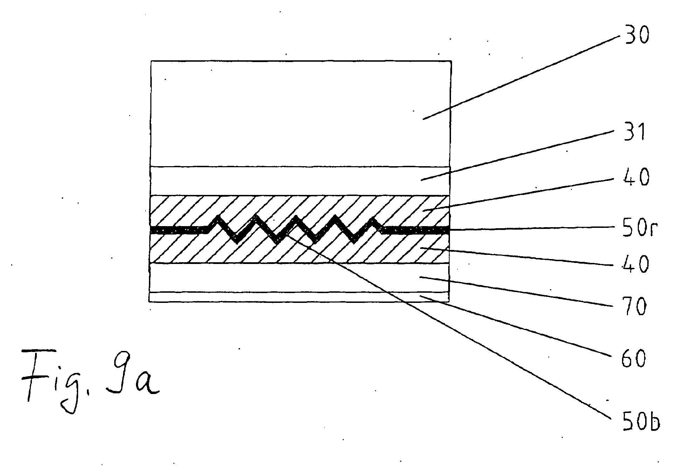

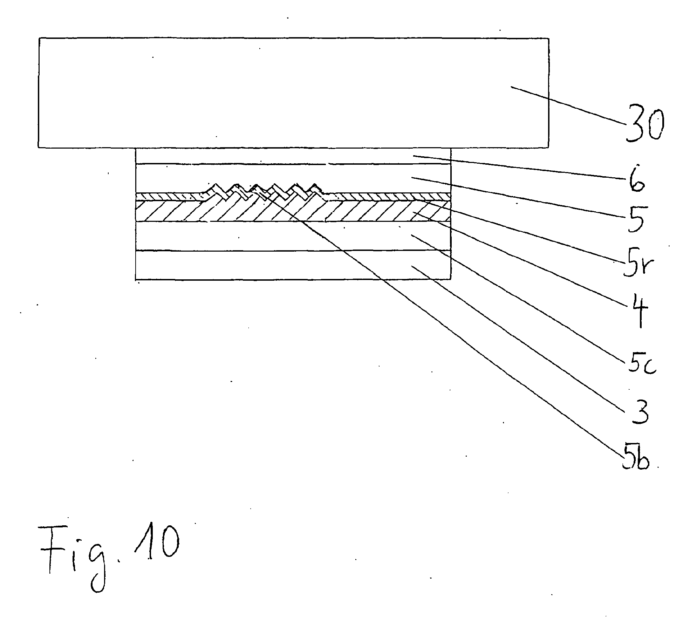

In entsprechender Weise können Farbmarkierungen auch in Laminierfolien erzeugt werden. Solche Laminierfolien sind in den Figuren 6 bis 10 dargestellt. Die Laminierfolie in Figur 6 umfaßt eine sog. Overiay-Folie 30, eine optionale Zwischenschicht 31, eine lasersensitive Schicht 40, eine eine Hintergrundschicht bildende Zwischenschicht 50, die ebenfalls optional ist, und eine Kleberschicht 60, die ebenfalls optional ist. Beim Laminiervorgang wird die Laminierfolie mit der Kleberschicht 60 der Substratoberfläche zugewandt auf das Substrat aufgebracht. Über die Kleberschicht 60 wird eine Klebeverbindung mit der Substratoberfläche ausgebildet. Die Overlay-Folie 30 bildet sodann die obere Schutzschicht, deren vom Substrat abgewandte Oberfläche die äußere Oberfläche der Folie bildet. Die Overlay-Folie 30 verbleibt also nach dem Aufbringen der Laminierfolie dort aufgebracht. Sie entspricht der Schutzschicht 3 der Prägefolie in Figur 1. Die lasersensitive Schicht 40 entspricht der lasersensitiven Schicht 4, d.h. der ersten Lackschicht 4 der Prägefolie in Figur 1. Die Zwischenschicht 50 entspricht der Hintergrundschicht 5, d.h. der zweiten Lackschicht 5 der Prägefolie in Figur 1. Die Kleberschicht 60 entspricht der Kleberschicht 6 der Prägefolie in Figur 1. Die Laminierfolien in den Figuren 7 und 8 stellen Abwandlungen der Laminierfolie in Figur 6 dar, bei denen die Hintergrundschicht in entsprechender Weise wie die Hintergrundschicht bei den Heißprägefolien in den Figuren 2 und 3 abgewandelt ist.

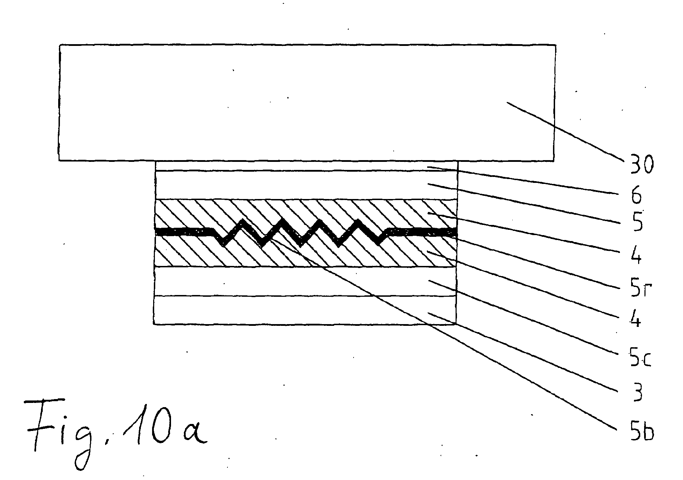

Die Laminierfolie in Figur 9 weist einen Schichtenaufbau mit gegenüber Figur 6 bis 8 abgewandelter Reihenfolge der aufeinander liegenden Schichten auf. Die Reihenfolge der Schichten entspricht dem Aufbau der Heißprägefolie in Fig. 5. Hierbei ist die Schicht 70 eine optionale Hintergrundschicht.

Figur 9a zeigt ein gegenüber dem Ausführungsbeispiel in Figur 9 abgewandeltes Ausführungsbeispiel mit einer Reihenfolge der Schichten entsprechend dem Aufbau der Heißprägefolie in Figur 5a.

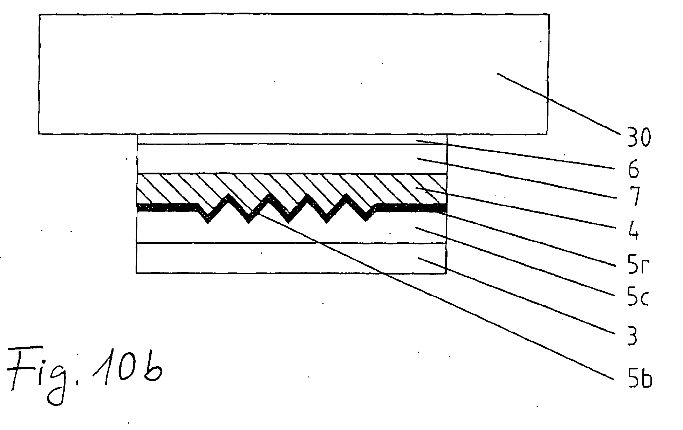

Die Laminierfolie in Figur 10 stellt eine Abwandlung der Laminierfolie in Figur 9 dar. Bei diesem Ausführungsbeispiel ist die Overlay-Folie 30 mit einer darauf aufgebrachten Heißprägefolie versehen. Diese dort aufgebrachte Heißprägefolie ersetzt die bei der Laminierfolie in Fig. 9 vorgesehenen Schichten 31, 50 bzw. 50r, 40, 70 und 60 durch die entsprechenden Schichten der Heißprägefolie. Bei der zur Herstellung dieser Laminierfolie verwendeten Heißprägefolie ist im Unterschied zu der Prägefolie in Fig. 5 die Reflexionsschicht 5r und die lasersensitive Schicht 4 in umgekehrter Reihenfolge angeordnet, so daß bei der Laminierfolie in Fig. 10 nun entsprechend wie bei der Laminierfolie der Figur 9 die Reflexionsschicht 5r auf der vom Substrat abgewandten Seite der lasersensitiven Schicht 4 angeordnet ist.

Übereinstimmend wie bei den übrigen dargestellten Ausführungsbeispielen ist die Diffraktionsstruktur 5b bei der Laminierfolie in Fig. 10 ebenfalls in den aneinander angrenzenden Bereichen der Schichten 4 und 5 ausgebildet. Die Lackschicht 5 ist hierbei als transparente Schicht ausgebildet.

Die Laminierfolie in Figur 10a ist ähnlich aufgebaut wie die Laminierfolie in Figur 10. Bei dem Ausführungsbeispiel in Figur 10a ist jedoch die Overiayfolie 30 mit einer darauf aufgebrachten Heißprägefolie versehen, die ähnlich aufgebaut ist, wie die Heißprägefolie des Ausführungsbeispiels in Figur 5a. Diese auf die Overlayfolie 30 aufgebrachte Heißprägefolie ersetzt die b0ei der Laminierfolie in Figur 9a vorgesehenen Schichten 31, 40, 50, 50r, 40, 70 und 60 durch die entsprechenden Schichten der Heißprägefolie. Die Laminierfolie in Figur 10a weist eine Schichtenfolge mit folgender Reihenfolge auf: Overlayfolie 30, Kleberschicht 6, optionale Lackschicht 5, lasersensitive Schicht 4, Reflexionsschicht 5r, lasersensitive Schicht 4, zusätzliche Lackschicht 5c und Schutzschicht 3. Die beiderseits der Reflexionsschicht 5r ausgebildeten lasersensitiven Schichten 4 können identisch ausgebildet sein, d.h. die Reflexionsschicht 5r ist dann in dieser lasersensitiven Gesamtschicht angeordnet. Die lasersensitiven Schichten 4 können jedoch auch unterschiedlich ausgebildet sein. Die Lackschicht 5 ist hierbei als transparente Schicht bzw. als helle Backupschicht ausgebildet.

Die Laminierfolie in Figur 10b stellt ein Ausführungsbeispiel dar, bei dem ebenfalls auf der Overlayfolie 30 eine Heißprägefolie aufgebracht ist. Diese aufgebrachte Heißprägefolie ist ähnlich ausgebildet wie die Folie in Figur 5. Sie ersetzt die bei der Laminierfolie in Figur 9a vorgesehenen Schichten 31, 40, 50 bzw. 50r, 40, 70 und 60 durch die Schichten der Heißprägefolie. Die Laminierfolie in Figur 10b weist eine Schichtenfolge mit folgender Reihenfolge auf: Overlayfolie 30, Kleberschicht 6, optionale Lackchicht 7, lasersensitive Schicht 4, Reflexionsschicht 5r, zusätzliche Lackschicht 5c und Schutzschicht 3. Die Lackschicht 7 ist hierbei als transparente Schicht bzw. als helle Backupschicht ausgebildet.

Die Laserbehandlung der Laminierfolie erfolgt in entsprechender Weise wie für die Transferfolie beschrieben, d.h. durch entsprechendes sukzessives Bleichen der in der lasersensitiven Schicht 40 enthaltenen Pigmente oder anderen Farbmittel oder durch entsprechende Farbumschläge der Pigmente oder anderen Farbmittel.

## Patentansprüche

1. Kunststoffkörper, als Folie, z.B. Transferfolle, insbesondere Heißprägefolie, oder Laminierfolie ausgebildet oder mit einer solchen Folie versehen,
wobei zumindest ein Teil des Körpers (4) in seiner stofflichen Zusammensetzung ein Farbmittelgemisch aufweist, welches aus mindestens drei verschiedenen Komponenten zusammengesetzt ist, wobei jede der drei Komponenten als Pigment oder als anderes Farbmittel ausgebildet ist und mittels Laser unter jeweils für die Komponente spezifischen Laserbedingungen veränderbar, d.h. durch Bleichen und/oder Farbumschlag veränderbar ist, vorzugsweise alleine durch Farbumschlag veränderbar ist,
**dadurch gekennzeichnet,**
**dass** für jede der drei Komponenten gilt, dass unter den für eine Komponente spezifischen Laserbedingungen die übrigen Komponenten nicht oder im wesentlichen nicht veränderbar sind und dass bei der Laserbestrahlung wenigstens eine der Komponenten einen Farbumschlag aufweist.

2. Kunststoffkörper nach Anspruch 1,
**dadurch gekennzeichnet,**
**dass** die für die verschiedenen Komponenten spezifischen Laserbedingungen vorzugsweise hinsichtlich der Laserwellenlänge unterschiedlich sind und unter den für die jeweilige Komponente spezifischen Laserbedingungen die übrigen Komponenten nicht oder im wesentlichen nicht veränderbar sind.

3. Kunststoffkörper nach Anspruch 1 oder 2,
**dadurch gekennzeichnet, dass** an einer Stelle des Kunststoffkörpers vorzugsweise zumindest bereichsweise an jeder Stelle des Kunststoffkörpers mehrere verschiedene Komponenten des Farbmittelgemisches, vorzugsweise sämtliche verschiedenen Komponenten des Farbmittelgemisches gemischt angeordnet sind und die Farbe an dieser Stelle durch vorzugsweise subtraktive Farbmischung gebildet ist.

4. Kunststoffkörper nach einem der vorhergehenden Ansprüche,
**dadurch gekennzeichnet,**
**dass** die Komponente bei der eingesetzten Wellenlänge des Laserlichts absorbiert, indem die Komponente bei dieser Wellenlänge ein Absorptionsmaximum, vorzugsweise eines von mehreren Absorptionsmaxima oder vorzugsweise ihr einziges oder ihr größtes Absorptionsmaximum aufweist.

5. Kunststoffkörper nach einem der Ansprüche 1 bis 4,
**dadurch gekennzeichnet,**
**dass** die Komponente bei der eingesetzten Wellenlänge des Laserlichts Licht absorbiert, wobei aber die Komponente bei dieser Wellenlänge kein Absorptionsmaximum aufweist, sondern diese Wellenlänge außerhalb des Absorptionsmaximums oder außerhalb der Absorptionsmaxima der Komponente liegt.

6. Kunststoffkörper nach einem der vorhergehenden Ansprüche ,
**dadurch gekennzeichnet,**
**dass** das Gemisch nur drei Farbmittelkomponenten oder mehr als drei Farbmittelkomponenten aufweist.

7. Kunststoffkörper nach einem der vorhergehenden Ansprüche,
**dadurch gekennzeichnet,**
**dass** eine bleichbare Komponente ein Cyanfarbmittel, vorzugsweise Cyanpigment ist und/oder dass eine bleichbare Komponente ein Magentafarbmittel, vorzugsweise Magentapigment ist und/oder dass eine bleichbare Komponente ein Gelbfarbmittel, vorzugsweise Gelbpigment ist.

8. Kunststoffkörper nach Anspruch 7,
**dadurch gekennzeichnet,**
**dass** das Cyanfarbmittel als ein ausschließlich oder vorzugsweise mit rotem Laserlicht bleichbares Farbmittel ausgebildet ist und/oder dass das Magentafarbmittel als ein ausschließlich oder vorzugsweise mit grünem Laserlicht bleichbares Farbmittel ausgebildet ist und/oder dass das Gelbfarbmittel ein als ein ausschließlich oder vorzugsweise mit blauem Laserlicht bleichbares Farbmittel ausgebildet ist.

9. Verfahren zur Herstellung eines Mehrfarbenbildes auf oder in einem Kunststoffkörper nach einem der vorhergehenden Ansprüche 1 bis 8,
**dadurch gekennzeichnet,**
**dass** in einem ersten Schritt durch Laserbestrahlung einer Stelle des Kunststoffkörpers bei für einen der drei Komponenten spezifischen Laserbedingungen nur die eine Komponente verändert wird und dass in einem zweiten Schritt durch Laserbestrahlung derselben Stelle des Körpers bei für eine weitere der drei Komponenten spezifischen Laserbedingungen nur diese weitere Komponente verändert wird.

10. Verfahren nach Anspruch 9,
**dadurch gekennzeichnet,**
**dass** in einem dritten Schritt durch Laserbestrahlung derselben Stelle des Kunststoffkörpers bei für eine andere weitere der drei Komponenten spezifischen Laserbedingungen derselben Stelle des Kunststoffkörpers nur diese andere weitere Komponente verändert wird.

11. Verfahren nach Anspruch 9 oder 10
**dadurch gekennzeichnet,**
**dass** in einem n-ten Schritt durch Laserbehandlung derselben Stelle des Kunststoffkörpers bei für eine n-te weitere Komponente spezifischen Laserbedingungen nur diese n-te Komponente verändert wird, wobei n größer 3 ist.

12. Verfahren nach einem der Ansprüche 9 bis 11,
**dadurch gekennzeichnet,**
**dass** durch die Laserbestrahlungen dieser Stelle des Körpers sämtliche Komponenten verändert werden.

13. Verfahren nach einem der Ansprüche 9 bis 12,
**dadurch gekennzeichnet,**
**dass** bei der Laserbestrahlung durch Steuerung der Laserbedingungen, insbesondere der Laserintensität und/oder der Pulsdauer und/oder der Bestrahlungszeit der zu erzielende Bleichungsgrad eingestellt wird.

14. Verfahren nach einem der Ansprüche 9 bis 13,
**dadurch gekennzeichnet,**
**dass** der Kunststoffkörper an mehreren Stellen nacheinander laserbestrahlt wird.

15. Verfahren nach Anspruch 9 bis 14,
**dadurch gekennzeichnet,**
**dass** durch die Laserbestrahlung an dieser Stelle des Körpers eine Farbe erzeugt wird, die durch die an dieser Stelle verbleibenden Farbmittel bzw. Komponenten gebildet wird.

16. Verfahren nach einem der Ansprüche 9 bis 15,
**dadurch gekennzeichnet,**
**dass** an der einen Stelle des Kunststoffkörpers mehrere unterschiedliche Komponenten, vorzugsweise sämtliche unterschiedlichen Komponenten gemischt angeordnet werden und die Farbe dieser Stelle durch subtraktive Farbmischung gebildet wird.

17. Verfahren nach einem der Ansprüche 9 bis 16,
**dadurch gekennzeichnet,**
**dass** als bleichbare Komponente ein Cyanfarbmittel, vorzugsweise Cyanpigment, und/ oder ein Magentafarbmittel, vorzugsweise Magentapigment, und/oder ein Gelbfarbmittel, vorzugsweise Gelbpigment, eingesetzt wird.

18. Verfahren nach Anspruch 17,
**dadurch gekennzeichnet,**
**dass** zum Bleichen des Cyanfarbmittels rotes Laserlicht und/oder zum Bleichen des Magentafarbmittels grünes Laserlicht und/oder zum Bleichen des Gelbfarbmittels blaues Laserlicht eingesetzt wird.

19. Verfahren nach Anspruch 17 oder 18,
**dadurch gekennzeichnet,**
**dass** die **Farbe Blau** durch Überlagerung, vorzugsweise subtraktive Mischung der Farben Cyan und Magenta gebildet wird, vorzugsweise aus dem Farbmittelgemisch mit Cyanfarbmittel, Magentafarbmittel und Gelbfarbmittel durch Bleichen des Gelbfarbmittels;
und/oder
**dass** die **Farbe Grün** durch Überlagerung, vorzugsweise subtraktive Mischung der Farben Cyan und Gelb gebildet wird, vorzugsweise aus dem Farbmittelgemisch mit Cyanfarbmittelt, Magentafarbmittel und Gelbfarbmittel durch Bleichen des Magentafarbmittels;
und/oder
**dass** die **Farbe Rot** durch Überlagerung vorzugsweise subtraktive Mischung der Farbe Gelb und Magenta gebildet wird, vorzugsweise aus dem Farbmittelgemisch mit Magentafarbmittel, Gelbfarbmittel und Cyanfarbmittel durch Bleichen des Cyanfarbmittels;
und/oder
**dass Schwarz oder Grau** durch Überlagerung, vorzugsweise subtraktive Mischung der Farben Cyan, Magenta und Gelb gebildet wird, vorzugsweise aus dem Farbmittelgemisch mit Magentafarbmittel, Gelbfarbmittel und Cyanfarbmittel;
und/oder
**dass** die **Farbe Magenta** durch das Magentafarbmittel gebildet wird durch Bleichen der in dem Farbmittelgemisch vorhandenen Farbmittel außer dem Magentafarbmittel, vorzugsweise aus dem Farbmittelgemisch umfassend Magentafarbmittel, Gelbfarbmittel und Cyanfarbmittel durch Bleichen des Gelbfarbmittels und des Cyanfarbmittels;
und/oder
**dass** die **Farbe Cyan** durch das Cyanfarbmittel gebildet wird durch Bleichen der übrigen Farbmittel in dem Farbmittelgemisch außer dem Cyanfarbmittel, vorzugsweise aus dem Farbmittelgemisch umfassend Cyanfarbmittel, Gelbfarbmittel und Magentafarbmittel durch Bleichen des Magentafarbmittels und des Gelbfarbmittels;
und/oder
**dass** die **Farbe Gelb** durch das Gelbfarbmittel gebildet wird durch Bleichen sämtlicher Farbmittel in dem Farbmittelgemisch außer dem Gelbfarbmittel, vorzugsweise aus dem Farbmittelgemisch umfassend Gelbfarbmittel, Magentafarbmittel und Cyanfarbmittel durch Bleichen des Magentafarbmittels und des Cyanfarbmittels.

## Claims

1. Plastic body, which is provided in the form of a film, for example, a transfer film, in particular a hot embossing film, or laminating film or which is provided with a film of this type, at least part of the body (4) having in its material composition a colour mixture which is composed of at least three different components, each of the three components being formed as a pigment or as another colorant and can be changed by means of a laser under laser conditions which are specific for the component in each case, that is to say can be changed by bleaching and/or a colour change, preferably can be changed by a colour change on its own, **characterized in that** it is true of each of the three components that, under the laser conditions specific for one component, the remaining components cannot be changed or cannot be changed substantially, and **in that** during the laser irradiation, at least one of the components exhibits a colour change.

2. Plastic body according to Claim 1, **characterized in that** the laser conditions specific for the various components are preferably different with respect to the laser wavelength and, under the laser conditions specific for the respective component, the remaining components cannot be changed or cannot be changed substantially.

3. Plastic body according to Claim 1 or 2, **characterized in that**, at a point on the plastic body, preferably at least in some regions at each point on the plastic body, a plurality of different components of the colorant mixture, preferably all the different components of the colorant mixture, are arranged in mixed form and the colour at this point is formed by preferably subtractive colour mixing.

4. Plastic body according to one of the preceding planes, **characterized in that** the component absorbs at the wavelength of the laser light used, **in that** the component has an absorption maximum at this wavelength, preferably one of a plurality of absorption maxima and preferably its single or its largest absorption maximum.

5. Plastic body according to one of Claims 1 to 4, **characterized in that** the component absorbs light at the wavelength of the laser light used but the component does not have an absorption maximum at this wavelength, instead this wavelength lies outside the absorption maximum or outside the absorption maxima of the component.

6. Plastic body according to one of the preceding claims, **characterized in that** the mixture has only three colorant components or more than three colorant components.

7. Plastic body according to one of the preceding claims, **characterized in that** one bleachable component is a cyan colorant, preferably cyan pigment, and/or **in that** one bleachable component is a magenta colorant, preferably magenta pigment, and/or **in that** one bleachable component is a yellow colorant, preferably yellow pigment.

8. Plastic body according to Claim 7, **characterized in that** the cyan colorant is formed as a colorant that can be bleached only or preferably with red laser light, and/or **in that** the magenta colorant is formed as a colorant that can be bleached only or preferably with green laser light, and/or **in that** the yellow colorant is formed as a colorant that can be bleached only or preferably with blue laser light.

9. Method for producing a multicolour image on or in a plastic body according to one of the preceding Claims 1 to 8, **characterized in that**, in a first step, by means of laser irradiation of a point on the plastic body under laser conditions specific for one of the three components, only one component is changed, and **in that**, in a second step, by means of laser irradiation of the same point on the body under laser conditions specific for a further of the three components, only this further component is changed.

10. Method according to Claim 9, **characterized in that**, in a third step, by means of laser irradiation of the same point on the plastic body under laser conditions specific for another further of the three components, only this other further component is changed.

11. Method according to Claim 9 or 10, **characterized in that**, in an nth step, by means of laser irradiation of the same point on the plastic body under laser conditions specific for an nth further component, only this nth component is changed, n being greater than 3.

12. Method according to one of Claims 9 to 11, **characterized in that**, as a result of the laser irradiations of this point on the body, all the components are changed.

13. Method according to one of Claims 9 to 12, **characterized in that** during the laser irradiation, by controlling the laser conditions, in particular the laser intensity and/or the pulse duration and/or irradiation time, the level of bleaching to be achieved is set.

14. Method according to one of Claims 9 to 13, **characterized in that** the plastic body is laser irradiated successively at a plurality of points.

15. Method according to Claim 9 to 14, **characterized in that**, as a result of the laser irradiation at this point on the body, a colour is produced which is formed by the colorants or components remaining at this point.

16. Method according to one of Claims 9 to 15, **characterized in that** a plurality of different components, preferably all the different components, are arranged mixed at one point on the plastic body, and the colour of this point is formed by subtractive colour mixing.

17. Method according to one of Claims 9 to 16, **characterized in that** the bleachable component used is a cyan colorant, preferably cyan pigment, and/or a magenta colorant, preferably magenta pigment, and/or a yellow colorant, preferably yellow pigment.

18. Method according to Claim 17, **characterized in that**, in order to bleach the cyan colorant, red laser light is used, and/or in order to bleach the magenta colorant, green laser light is used, and/or in order to bleach the yellow colorant, blue laser light is used.

19. Method according to Claim 17 or 18, **characterized in that** the **colour blue** is formed by superimposition, preferably subtractive mixing, of the colorants cyan and magenta, preferably from the colorant mixture having cyan colorant, magenta colorant and yellow colorant by bleaching the yellow colorant;
and/or
**in that** the **colour green** is formed by superimposition, preferably subtractive mixing, of the colorants cyan and yellow, preferably from the colorant mixture having cyan colorant, magenta colorant and yellow colorant by bleaching the magenta colorant;
and/or
**in that** the **colour red** is formed by superimposition, preferably subtractive mixing, of the colorants yellow and magenta, preferably from the colorant mixture having magenta colorant, yellow colorant and cyan colorant by bleaching the cyan colorant;
and/or
**in that black or grey** is formed by superimposition, preferably subtractive mixing, of the colorants cyan, magenta and yellow, preferably from the colorant mixture having magenta colorant, yellow colorant and cyan colorant;
and/or
**in that** the **colour magenta** is formed by the magenta colorant by bleaching the colorants present in the colorant mixture apart from the magenta colorant, preferably from the colorant mixture comprising magenta colorant, yellow colorant and cyan colorant by bleaching the yellow colorant and the cyan colorant;
and/or
**in that** the **colour cyan** is formed by the cyan colorant by bleaching the remaining colorants present in the colorant mixture apart from the cyan colorant, preferably from the colorant mixture comprising cyan colorant, yellow colorant and magenta colorant by bleaching the magenta colorant and the yellow colorant;
and/or
**in that** the **colour yellow** is formed by the yellow colorant by bleaching all the colorants present in the colorant mixture apart from the yellow colorant, preferably from the colorant mixture comprising yellow colorant, magenta colorant, and cyan colorant by bleaching the magenta colorant and the cyan colorant.

## Revendications

1. Corps en matière plastique, conçu comme un film, par exemple film de transfert, en particulier film estampé à chaud ou film laminé, ou muni d'un tel film, moyennant quoi au moins une partie du corps (4) présente une composition de substances formée d'un mélange de colorants comprenant au moins trois composants différents, chacun des trois composants étant conçu comme un pigment ou un autre colorant, et peut être modifié au moyen du laser dans des conditions de laser spécifiques aux composants, c'est-à-dire peut être modifié par décoloration et/ou virage de teinte, de préférence peut être modifié uniquement par virage de teinte,
**caractérisé en ce que**,
pour chacun des trois composants, on considère que dans les conditions de laser spécifiques à un composant, les autres composants ne peuvent être modifiés ou ne sont pas sensiblement modifiables, et **en ce que** lors de l'irradiation par laser, au moins un des composants présente un virage de teinte.

2. Corps en matière plastique selon la revendication 1,
**caractérisé en ce que**,
les conditions de laser spécifiques aux différents composants sont variables de préférence d'un point de vue de la longueur d'onde laser, et dans les conditions de laser spécifiques aux composants respectifs, les autres composants ne peuvent être modifiés ou ne sont pas sensiblement modifiables.

3. Corps en matière plastique selon la revendication 1 ou 2,
**caractérisé en ce que**, à un emplacement du corps en matière plastique, de préférence au moins à certains endroits de chaque emplacement du corps en matière plastique, plusieurs composants différents du mélange de colorants, de préférence l'ensemble des différents composants du mélange de colorants, sont disposés mélangés, et la couleur est formée à cet emplacement par de préférence le mélange de couleurs soustractif.

4. Corps en matière plastique selon une des revendications précédentes,
**caractérisé en ce que**,
le composant absorbe la lumière avec la longueur d'onde utilisée de la lumière laser, dans la mesure où les composants présentent avec cette longueur d'onde un seuil d'absorption maximal, de préférence un seuil d'absorption de plusieurs seuils d'absorption maximaux ou de préférence leur unique ou plus grand seuil d'absorption maximal.

5. Corps en matière plastique selon une des revendications 1 à 4,
**caractérisé en ce que**,
les composants absorbent la lumière avec la longueur d'onde utilisée de la lumière laser, les composants ne présentant pas de seuil d'absorption maximal avec cette longueur d'onde, cette longueur d'onde se situant plutôt en dehors du seuil d'absorption maximal ou en dehors des seuils d'absorption maximaux des composants.

6. Corps en matière plastique selon une des revendications précédentes,
**caractérisé en ce que**,
le mélange ne comprend que trois composants de colorants ou plus de trois composants de colorants.

7. Corps en matière plastique selon une des revendications précédentes,
**caractérisé en ce que**,
un composant pouvant être décoloré est un colorant cyan, de préférence un pigment cyan, et/ou **en ce qu'**un composant pouvant être décoloré est un colorant magenta, de préférence un pigment magenta, et/ou **en ce qu'**un composant pouvant être décoloré est un colorant jaune, de préférence un pigment jaune.

8. Corps en matière plastique selon la revendication 7,
**caractérisé en ce que**,
le colorant cyan est conçu comme un colorant pouvant être décoloré exclusivement ou de préférence avec une lumière laser rouge, et/ou le colorant magenta est conçu comme un colorant pouvant être décoloré exclusivement ou de préférence avec une lumière laser verte, et/ou **en ce que** le colorant jaune est conçu comme un colorant pouvant être décoloré exclusivement ou de préférence avec une lumière laser bleue.

9. Procédé de fabrication d'une image à plusieurs couleurs sur ou dans un corps en matière plastique selon une des revendications précédentes 1 à 8,
**caractérisé en ce que**,
dans une première étape par irradiation par laser d'un emplacement du corps en matière plastique dans des conditions de laser spécifiques à un des trois composants, seul un composant est modifié, et **en ce que** dans une deuxième étape par irradiation par laser du même emplacement du corps, dans les conditions de laser spécifiques à un autre des trois composants, seul cet autre composant est modifié.

10. Procédé selon la revendication 9,
**caractérisé en ce que**,
dans une troisième étape par irradiation par laser du même emplacement du corps en matière plastique dans des conditions de laser spécifiques à un autre des trois composants du même emplacement du corps en matière plastique, seul cet autre composant est modifié.

11. Procédé selon la revendication 9 ou 10,
**caractérisé en ce que**,
dans une nième étape par traitement laser du même emplacement du corps en matière plastique dans des conditions de laser spécifiques à un nième autre composant, seul ce nième composant est modifié, n étant supérieur à 3.

12. Procédé selon une des revendications 9 à 11,
**caractérisé en ce que**,
tous les composants sont modifiés par les irradiations par laser de cet emplacement du corps.

13. Procédé selon une des revendications 9 à 12,
**caractérisé en ce que**,
lors de l'irradiation par laser, le degré de décoloration à atteindre est réglé en commandant les conditions laser, en particulier l'intensité laser et/ou la durée d'impulsion et/ou le temps d'irradiation.

14. Procédé selon une des revendications 9 à 13,
**caractérisé en ce que**,
le corps en matière plastique est irradié par laser à plusieurs emplacements consécutifs.

15. Procédé selon la revendication 9 à 14,
**caractérisé en ce que**,
par l'irradiation par laser à cet emplacement du corps, une couleur est produite, laquelle est formée par les colorants et/ou les composants résiduels à cet emplacement.

16. Procédé selon une des revendications 9 à 15,
**caractérisé en ce que**,
à un emplacement du corps en matière plastique, plusieurs composants différents, de préférence l'ensemble des différents composants, sont placés mélangés et la couleur de cet emplacement est formée par mélange de couleurs soustractif.

17. Procédé selon une des revendications 9 à 16,
**caractérisé en ce que**,
un colorant cyan, de préférence un pigment cyan, et/ou un colorant magenta, de préférence un pigment magenta, et/ou un colorant jaune, de préférence un pigment jaune, sont utilisés en tant que composants pouvant être décolorés.

18. Procédé selon la revendication 17,
**caractérisé en ce que**,
pour la décoloration du colorant cyan, une lumière laser rouge, et/ou pour la décoloration du colorant magenta, une lumière laser verte, et/ou pour la décoloration du colorant jaune, une lumière laser bleue est utilisée.

19. Procédé selon la revendication 17 ou 18,
**caractérisé en ce que**,
la couleur bleue est formée par superposition, de préférence par mélange soustractif des couleurs cyan et magenta, de préférence à partir du mélange de colorants comprenant le colorant cyan, le colorant magenta et le colorant jaune par décoloration du colorant jaune ;
et/ou
la couleur verte est formée par superposition, de préférence par mélange soustractif des couleurs cyan et jaune, de préférence à partir du mélange de colorants comprenant le colorant cyan, le colorant magenta et le colorant jaune par décoloration du colorant magenta ;
et/ou
la couleur rouge est formée par superposition, de préférence par mélange soustractif des couleurs jaune et magenta, de préférence à partir du mélange de colorants comprenant le colorant magenta, le colorant jaune et le colorant cyan par décoloration du colorant cyan ;
et/ou
le noir ou le gris est formé par superposition, de préférence par mélange soustractif des couleurs cyan, magenta et jaune, de préférence à partir du mélange de colorants comprenant le colorant magenta, le colorant jaune et le colorant cyan ;
et/ou
la couleur magenta est formée par le colorant magenta par décoloration des colorants existants dans le mélange de colorants en dehors du colorant magenta, de préférence à partir du mélange de colorants comprenant le colorant magenta, le colorant jaune et le colorant cyan par décoloration du colorant jaune et du colorant cyan ;
et/ou
la couleur cyan est formée par le colorant cyan par décoloration des autres colorants du mélange de colorants en dehors du colorant cyan, de préférence à partir du mélange de colorants comprenant le colorant cyan, le colorant jaune et le colorant magenta par décoloration du colorant magenta et du colorant jaune ;
et/ou
la couleur jaune est formée par le colorant jaune par décoloration de tous les colorants du mélange de colorants en dehors du colorant jaune, de préférence à partir du mélange de colorants comprenant le colorant jaune, le colorant magenta et le colorant cyan par décoloration du colorant magenta et du colorant cyan.
